(19) Europäisches Patentamt
European Patent Office
Office européen des brevets

(11) **EP 4 607 047 A1**

(12) **EUROPEAN PATENT APPLICATION**
published in accordance with Art. 153(4) EPC

(43) Date of publication:
**27.08.2025 Bulletin 2025/35**

(51) International Patent Classification (IPC):
**F16C 33/50** (2006.01)  **F16C 33/56** (2006.01)
**F16C 43/04** (2006.01)

(21) Application number: **23891558.1**

(52) Cooperative Patent Classification (CPC):
**F16C 33/50; F16C 33/56; F16C 43/04**

(22) Date of filing: **14.11.2023**

(86) International application number:
**PCT/JP2023/040860**

(87) International publication number:
**WO 2024/106411 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2022 JP 2022185128**
**19.10.2023 JP 2023180301**

(71) Applicant: **NTN Corporation**
**Osaka-shi Osaka 530-0005 (JP)**

(72) Inventors:
• **NISHIDA, Yuta**
**Kuwana-shi, Mie 511-8678 (JP)**
• **ITO, Tomohito**
**Kuwana-shi, Mie 511-8678 (JP)**

(74) Representative: **Maikowski & Ninnemann**
**Patentanwälte Partnerschaft mbB**
**Postfach 15 09 20**
**10671 Berlin (DE)**

(54) **TAPERED ROLLER BEARING**

(57)  Provided is a tapered roller bearing in which an inner ring assembly is integrated by a connector such as a wire and a connector can be removed after incorporating a bearing, and the tapered roller bearing can realize a roller guide. The tapered roller bearing (1) removably includes a falling-off preventer (32) to prevent a tapered roller (15) contained in a pocket (16) having a first guide claw extending toward an inner diameter side of a retainer segment (20) from falling off toward the outer diameter side. The falling-off preventer (32) is engaged with an outer diameter surface and a large-diameter-side lateral-surface of a large-diameter-side arc-shaped portion (22) of the retainer segment (20). The retainer segment (20) and the falling-off preventer (32) are connected with the connector (25).

Fig. 3

**Description**

CROSS REFERENCE TO THE RELATED APPLICATION

This application is based on and claims Convention priorities to a Japanese patent application No. 2022-185128 filed November 18, 2022 and a Japanese patent application No. 2023-180301 filed October 19, 2023, the entire disclosure of which is herein incorporated by reference as a part of this application.

BACKGROUND OF THE INVENTION

(Field of the Invention)

The present invention relates to a tapered roller bearing for use as a main shaft of a wind power generator or in an industrial machinery, in particular, to a large tapered roller bearing, for example, whose outer diameter exceeds 1 m.

(Description of Related Art)

A tapered roller bearing generally includes a retainer made of steel sheet. The retainer made of steel sheet is produced, for example, through a press process. However, for a large tapered roller bearing whose outer diameter exceeds 1 m, it is difficult to be formed through the press process due to the problems on facilities. On the other hand, when the retainer is produced by cutting, the costs will increase and there will be more waste in view of material loss as compared with pressed products. To reduce the costs, a segment retainer has been produced by forming a plurality of retainer segments by injection molding of resin and integrating them (e.g., Patent Document 1). Incidentally, it is difficult to form a large integrated ring exceeding 1 m by injection molding of resin.

In such segment retainer, for example, when a user incorporates a single row tapered roller bearing into a wind turbine, there is a process for treating an inner ring assembly with a small end surface facing downward. In the process, to prevent rollers from falling off from the retainers, a method has been devised for integrating the segment retainers by a connector such as a wire to put together the retainers (for example, Patent Documents 2 to 4).

[Patent Document 1] JP Patent No. 4342512
[Patent Document 2] JP Laid-open Patent Publication No. 2011-137530
[Patent Document 3] WO 2013/092217
[Patent Document 4] JP Laid-open Patent Publication No. 2018-080747

The problem of the segment retainer connected by the wire is that the wind turbine is driven with the wire attached to the bearing. Even if the wire is detached after assembling the wind turbine, the retainer is guided by a rolling contact surface of a roller, an inner ring raceway and an outer ring raceway, which is not a roller guide. If a conventional "roller guide segment retainer" in which the wire is not used is temporary integrated by the wire, there is a possibility that the rollers fall off when the inner ring assembly is turned upside down. In the case where the wind turbine is driven with the wire attached, there is a fear that wear, abnormal sound, and other problems are generated due to the wire. In addition, in the case where the retainer is guided by the raceway, there is a possibility of wear of a contact part of the retainer with the raceway and the raceway.

SUMMARY OF THE INVENTION

An object of the present invention is to provide a tapered roller bearing in which an inner ring assembly is integrated by a connector such as a wire and the connector can be removed after incorporating a bearing, and the tapered roller bearing can realize a roller guide.

A tapered roller bearing according to the present invention includes: an inner ring; an outer ring; a plurality of tapered rollers interposed between the inner ring and the outer ring; and a retainer which retains the tapered roller, the retainer including a plurality of retainer segments divided in a circumferential direction, the plurality of the retainer segments being connected by a removable connector. Each of the retainer segments has three or more pockets arranged in the circumferential direction which hold the tapered rollers. Each of the retainer segments has a large-diameter-side arc-shaped portion and a small-diameter-side arc-shaped portion extending circumferentially and a plurality of pillars which connect the large-diameter-side arc-shaped portion and the small-diameter-side arc-shaped portion. The pockets consisting of: the large-diameter-side arc-shaped portion; the small-diameter-side arc-shaped portion; and the pillar. A part of the pockets has a first guide claw extending toward an inner diameter side from the pillar and the rest of the pockets has a second guide claw extending toward an outer diameter side from the pillar. In addition, the tapered roller bearing includes a removable falling-off preventer which prevents the tapered roller contained in the pocket having the first guide claw from falling off toward the outer diameter side. The falling-off preventer is engaged with an outer diameter surface and a large-diameter-side lateral-surface of the large-diameter-side arc-shaped portion of the retainer segment. The retainer segments and the falling-off preventer are connected with the connector. The connector is, for example, a wire. The retainer is, for example, a retainer for a large tapered roller bearing, for example, whose outer diameter exceeds 1 m.

According to this configuration, since the connector and the falling-off preventer are removable, the inner ring assembly is integrated by the connector and the falling-off preventer, and the connector can be removed after incorporating a bearing. Moreover, since the retainer is guided by only the tapered roller with the first guide claw and the second guide claw during operation, the roller guide can be realized.

In the present invention, the falling-off preventer may be inserted from a large end surface side of the inner ring and may be arranged along the pillar or the second guide claw. According to this configuration, the falling-off preventer can lead to suppress the movement of the tapered roller in a radial direction.

Further, in the present invention, each of the retainer segments may include, on an end portion in the circumferential direction of the large-diameter-side arc-shaped portion, a falling-off preventer guide portion which suppresses the movement of the falling-off preventer in the circumferential direction. According to this configuration, the falling-off preventer can be easily attached to and detached from the retainer segment.

In the present invention, the falling-off preventer may have a guide portion with which the connector is engaged. In this case, the guide portion may be an insertion hole into which the connector is inserted or an engagement groove with which the connector is engaged. According this configuration, it is easy to integrate the retainer segments with the falling-off preventer by the connector.

In the present invention, the falling-off preventer may have an inner ring engaging portion engaged with a large end surface of the inner ring. According to this configuration, the inner ring engaging portion can prevent an inner-diameter side of the retainer segment from spreading due to tightening of the connector.

In the present invention, moreover, the tapered roller bearing may further include a large-diameter-side protruding portion which has an engaging portion with the connector and is disposed on opposite end sides of the large-diameter-side lateral-surface of the large-diameter-side arc-shaped portion of the retainer segment. According this configuration, it is easy to integrate the retainer segments with the falling-off preventer by the connector.

In the present invention, opposite ends of the connector may be connected together by a fastening portion or a fastening member. According to this configuration, it is easy to handle the connector.

In the present invention, the connector may be divided into a plurality of connector segments, and ends of each of the connector segments may be connected together by a fastening portion or a fastening member. In this case, a plurality of the fastening portions or the fastening members may be arranged at equal intervals in the circumferential direction. According this configuration, it is possible to apply uniform fastening force to the connector by the fastening portion or the fastening member.

In the present invention, moreover, the tapered roller bearing may further include a small-diameter-side protruding portion, into which a ring-shaped jig can be fitted, which portion is arranged on a small-diameter-side lateral-surface of the small-diameter-side arc-shaped portion of the retainer segment. According to this configuration, the ring-shaped jig can prevent the small diameter side of the retainer segment arranged in a ring shape from spreading.

In the present invention, the retainer segment may be made of Poly Ether Ketone that contains carbon fibers or glass fibers. In addition, the falling-off preventer may be made of resin or metal.

In the present invention, in a state in which the tapered roller is arranged on a raceway surface of the inner ring with the large end surface of the inner ring facing downward, when an angle of a large flange portion of the inner ring with respect to a straight line that is perpendicular to a central axis of the inner ring is defined as I, a chamfered width of a leading edge of the large flange portion is defined as H, a distance from the central axis of the inner ring to a center of gravity of the tapered roller is defined as y1, and a diameter of the large flange portion is defined as J, the condition below may be satisfied.

$$(J/2) - H \cdot cosl > y1$$

According to this configuration, when the tapered roller is incorporated into the inner ring, it is possible to prevent the tapered rollers from falling off due to self-weight.

In the present invention, in a state in which the retainer segments are connected by the connector, when a diameter of the small flange portion of the inner ring is defined as M, an angle of the small flange portion with respect to a straight line that is perpendicular to a central axis of the inner ring is defined as L, a chamfered width of a leading edge of the small flange portion is defined as K, and a distance, to the central axis, from a contact point C at which a side surface of the small flange portion comes into contact with an end surface of the tapered roller on the small diameter side when the tapered roller is rotated around a leading edge of the large flange portion of the inner ring is defined as y3, the condition below may be satisfied.

$$(M/2) - K \cdot cosL > y3$$

According to this configuration, since the end surface of the tapered roller on the small diameter side comes into contact with the contact point C on the side surface of the small flange portion, the rotation of the tapered roller is suppressed.

Further, in the present invention, the tapered roller bearing may further include a small-diameter-side-engaging portion which removably engages a small-diameter-side-connector and is provided on the small-diameter-side lateral-surface of the small-diameter-side arc-shaped portion of the retainer segment. According to this configuration, the small-diameter-side-connector can prevent the inner diameter side of the retainer segments arranged in a ring shape from spreading.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views:

    Fig. 1 is a cross-sectional view illustrating a tapered roller bearing according to a first embodiment of the present invention;

    Fig. 2 is a front view of an inner ring assembly of the tapered roller bearing as viewed from an axial direction;

    Fig. 3 is a perspective view illustrating the inner ring assembly;

    Fig. 4 is a cross-sectional view illustrating a retainer segment of a retainer of the tapered roller bearing;

    Fig. 5 is a top plan view of the retainer segment as viewed from an outer side in a radial direction;

    Fig. 6 is a perspective view illustrating the retainer segment;

    Fig. 7 is a perspective view illustrating a variation of a falling-off preventer of the inner ring assembly;

    Fig. 8 is a perspective view illustrating another variation of a falling-off preventer of the inner ring assembly;

    Fig. 9 is a perspective view illustrating yet another variation of a falling-off preventer of the inner ring assembly;

    Fig. 10 is a cross-sectional view illustrating an inner ring assembly in which the falling-off preventer is used;

    Fig. 11 is a cross-sectional view illustrating an inner ring assembly in which the falling-off preventer is used;

    Fig. 12 is a cross-sectional view illustrating the tapered roller bearing;

    Fig. 13 is a schematic view illustrating a relationship between a tapered roller and a large flange portion of an inner ring when a tapered roller is arranged in the inner ring with the large end surface of the inner ring facing downward;

    Fig. 14 is a perspective view illustrating tapered rollers inserted into the retainer segment;

    Fig. 15 is a perspective view illustrating the retainer segment inserted into the inner ring;

    Fig. 16 is a cross-sectional view illustrating the retainer segment inserted into the inner ring;

    Fig. 17 is a perspective view illustrating the falling-off preventers inserted into the retainer segment;

    Fig. 18 is a perspective view illustrating the retainer segments arranged in a ring shape;

    Fig. 19 is a perspective view illustrating the inner ring assembly to which a ring-shaped jig and connectors are attached;

    Fig. 20 is a schematic view illustrating a rotating state of the tapered roller arranged on a raceway surface of the inner ring;

    Fig. 21 is a schematic view illustrating a relationship between a height of a small flange portion of the inner ring and the tapered roller when the tapered roller arranged on the raceway surface of the inner ring is rotated;

    Fig. 22 is a cross-sectional view illustrating the inner ring assembly incorporated into an outer ring;

    Fig. 23 is a cross-sectional view illustrating the inner ring assembly incorporated into the outer ring;

    Fig. 24 is a cross-sectional view illustrating a tapered roller bearing according to a second embodiment of the present invention;

    Fig. 25 is a top plan view illustrating a segment of a segment retainer used in the tapered roller bearing of Fig. 24;

    Fig. 26 is a perspective view illustrating the segment of the segment retainer used in the tapered roller bearing of Fig. 24;

    Fig. 27 is a cross-sectional view illustrating the segment of the segment retainer used in the tapered roller bearing of Fig. 24;

    Fig. 28 is a cross-sectional view illustrating another example of a segment of a segment retainer used in the tapered roller bearing of Fig. 24;

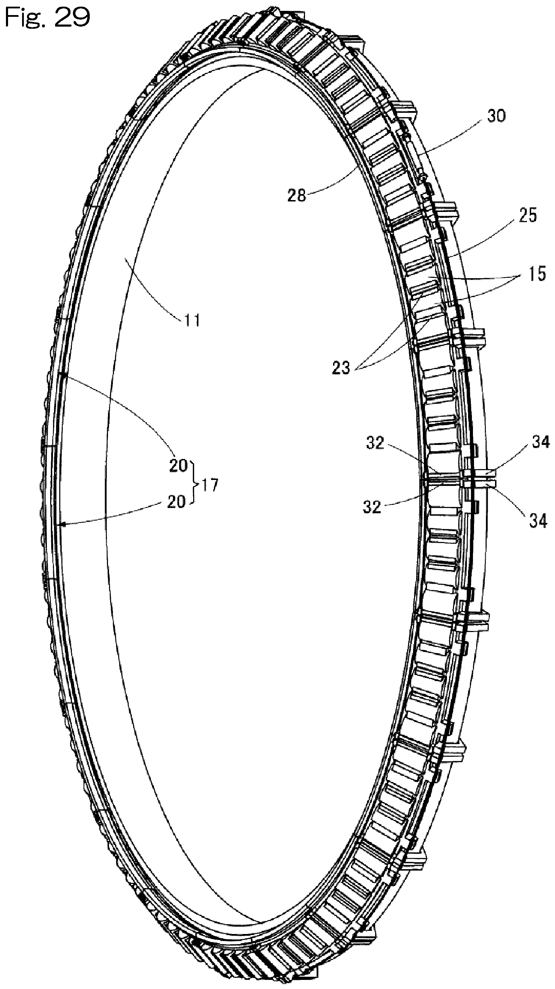

    Fig. 29 is a perspective view illustrating the tapered roller bearing of Fig. 24 in which an outer ring is removed;

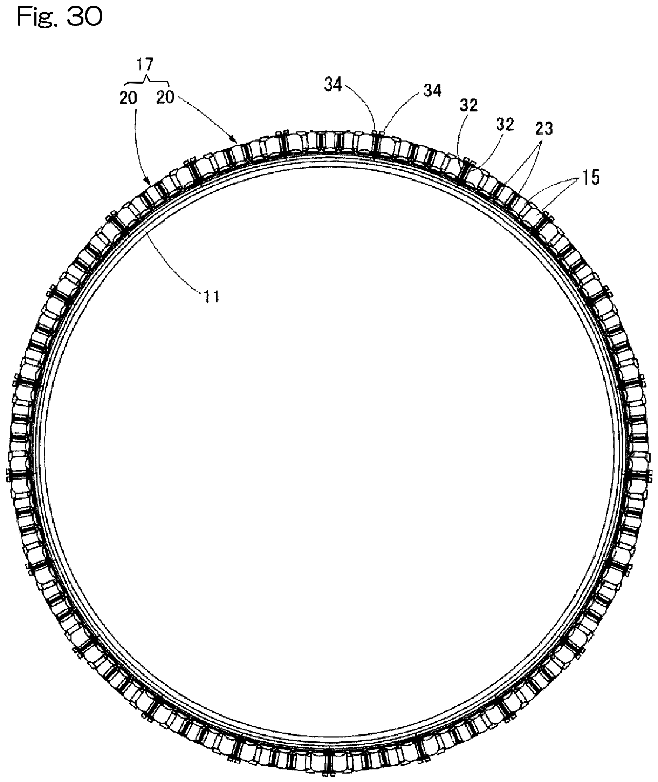

    Fig. 30 is a front view illustrating the tapered roller bearing of Fig. 24 in which the outer ring is removed;

    Fig. 31 is a cross-sectional view illustrating the tapered roller bearing of Fig. 24 after a connector is bound;

    Fig. 32 is a cross-sectional view illustrating a third embodiment of a tapered roller bearing according to the present invention;

    Fig. 33 is a perspective view illustrating a fourth embodiment of a tapered roller bearing according to the present invention;

    Fig. 34 is a front view of an inner ring assembly of a tapered roller bearing according to a fifth embodiment of the present invention as viewed from an axial direction;

Fig. 35 is a perspective view of the inner ring assembly;

Fig. 36 is a cross-sectional view illustrating a retainer segment of a retainer of the tapered roller bearing;

Fig. 37 is a top plan view of the retainer segment as viewed from an outer side in a radial direction; and

Fig. 38 is a perspective view of the retainer segment.

DESCRIPTION OF EMBODIMENTS

Favorable embodiments of the present invention will be described in lights of Figures. In the following description, a direction along a bearing center axis AX is referred to as an "axial direction", a direction perpendicular to the bearing center axis AX is referred to as a "radial direction", and a circumferential direction around the bearing center axis AX is referred as a "circumferential direction". In addition, a side toward the bearing center axis AX is referred as an "inner diameter side" and a side away from the bearing center axis AX is refereed as an "outer diameter side". Further, in the axial direction, a direction to which a diameter of a raceway surface 14 of an outer ring 12 decreases is referred as a "small diameter side", and a direction to which the raceway surface 14 increases is referred as a "large diameter side".

[First Embodiment]

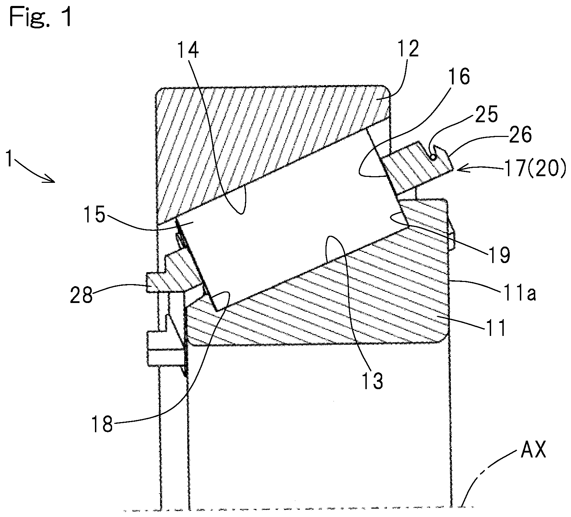

As shown in Fig. 1, a tapered roller bearing 1 of this embodiment includes an inner ring 11, an outer ring 12, a plurality of tapered rollers 15 interposed between the inner ring 11 and the outer ring 12, and a retainer 17 retaining the plurality of tapered rollers 15 at fixed intervals. The retainer 17 has a pocket 16 opened in the radial direction, and the pocket 16 holds the tapered roller 15.

The outer ring 12 has a raceway surface 14 on which the tapered roller 15 rolls on an inner circumference of the outer ring 12. The inner ring 11 has a raceway surface 13 on which the tapered roller 15 rolls on an outer circumference of the inner ring 11, and has a large flange portion 19 and a small flange portion 18 which come into contact with end surfaces of the tapered roller 15 on opposite sides in the axial direction across the raceway surface 13, respectively.

The tapered roller bearing 1 of this embodiment is a large tapered roller bearing, for example, used to support a main shaft of a wind power generator. In the tapered roller bearing 1 having such feature, an average diameter of the tapered roller 15 is 40 mm or lager and an outer diameter of the bearing 1 m or larger. However, the use of the tapered roller 1 is not limited to this.

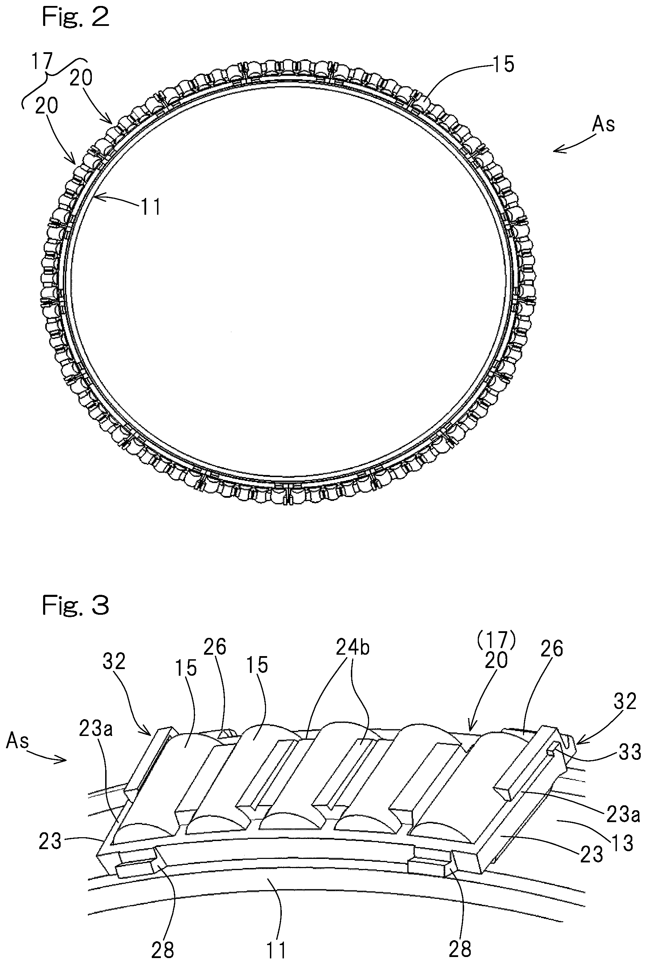

Fig. 2 is a front view of an inner ring assembly As consisting of the inner ring 11, the retainer 17 and the tapered roller 15 as viewed from the axial direction. As shown in Fig. 2, the retainer 17 is a segment retainer including a plurality of retainer segments 20 divided in a circumferential direction. To be specific, the retainer 17 consists of the plurality of the retainer segments 20 connected by connectors 25 described below. The retainer segment 20 of this embodiment is made of resin. Specifically, the retainer segment 20 is made of Poly Ether Ketone that contains carbon fibers or glass fibers. However, a material of the retainer segment 20 is not limited to this.

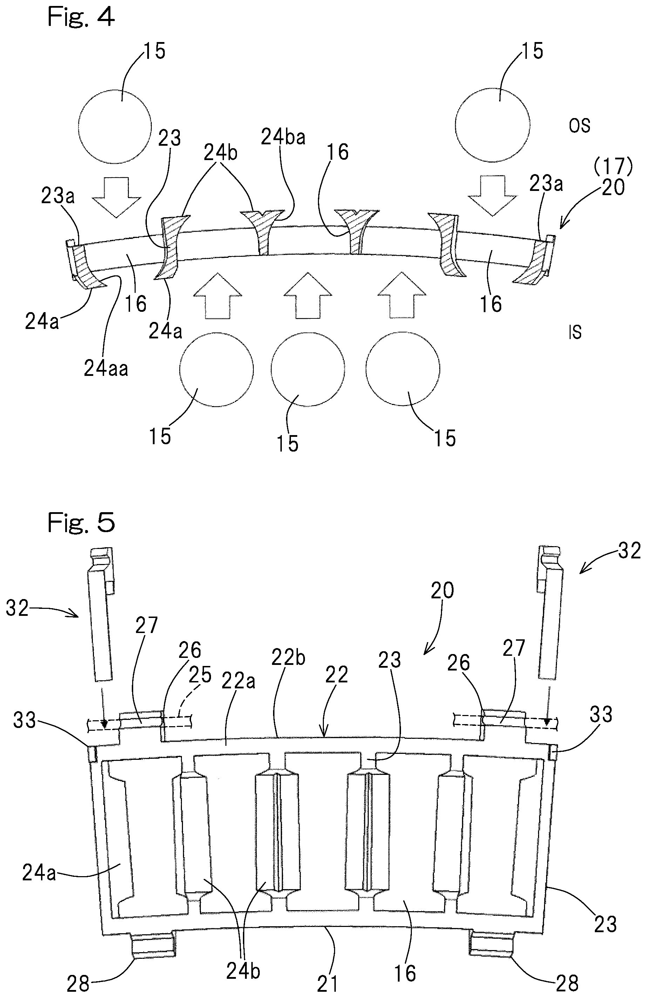

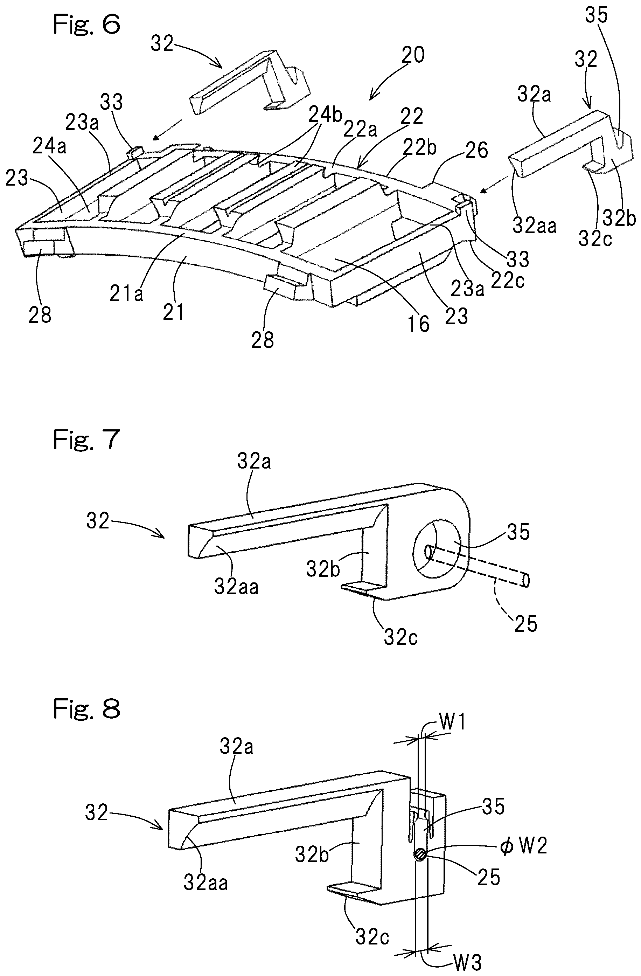

Fig. 3 is a perspective view of the inner ring assembly As. Fig. 4 is a cross-sectional view of the retainer segment 20. Fig. 5 is a top plan view of the retainer segment 20 viewed from an outer side in the radial direction. Fig. 6 is a perspective view of the retainer segment 20. In fact, Fig. 3 shows only one retainer segment 20. In the following description, the retainer segment 20 is sometimes referred to simply as a "segment 20".

The segment 20 includes, as shown in Fig. 5, a large-diameter-side arc-shaped portion 22 and a small-diameter-side arc-shaped portion 21 extending circumferentially and a plurality of pillars 23 which connect the large-diameter-side arc-shaped portion 22 and the small-diameter-side arc-shaped portion 21. Namely, the small-diameter-side arc-shaped portion 21 and the large-diameter-side arc-shaped portion 22 oppose to each other at a predetermined interval, and the plurality of pillars 23 are extended between the small-diameter-side arc-shaped portion 21 and the large-diameter-side arc-shaped portion 22.

A space surrounded by two adjacent pillars 23, 23, the small-diameter-side arc-shaped portion 21, and the large-diameter-side arc-shaped portion 22 constitutes the pocket 16 for containing the tapered roller 15. In this embodiment, six pillars 23 are provided on one segment 20, and five pockets 16 are arranged in the circumferential direction. However, the number of the pockets 16 is not limited to this, and it is required to arrange three or more pockets 16 in the circumferential direction on one segment 20.

As shown in Fig. 4, the pockets 16, 16 located at opposite ends in the circumferential direction of the five pockets 16 have a first guide claw 24a extending toward the inner diameter side from the pillar 23, and the other three central pockets 16 have a second guide claw 24b extending toward an outer diameter side OS from the pillar 23. The first guide claw 24a prevents the tapered roller 15 from slipping out to an inner diameter side IS, and the second guide claw 24b prevents the tapered roller 15 from slipping out to the outer diameter side OS.

Roller guide surfaces 24aa, 24ba as inner peripheral surfaces of the first and second guide claws 24a, 24b have concave shapes curved along the shape of the tapered rollers 15. With the guide claws 24a, 24b, the retainer 17 is guided by only the tapered roller 15 during operation. In other words, the tapered roller bearing 1 of this embodiment can achieve a roller guide.

The tapered rollers 15 can be inserted into the three central pockets 16 from the inner diameter side IS of the segment 20. The second guide claw 24b prevents the tapered rollers 15 from slipping out to the outer diameter side OS. Moreover, in the inner ring assembly As of Fig. 3, since the raceway surface 13 of the inner ring is located on the inner diameter side, the tapered rollers 15 is also prevented from slipping out to the inner diameter side.

As shown in Fig. 4, the tapered roller 15 can be inserted from the outer diameter side OS into the pocket 16 located at an end in the circumferential direction. In the inner ring assembly As of Fig. 3, since the raceway surface 13 of the inner ring is located on the inner diameter side, the tapered rollers 15 is also prevented from slipping out to the inner diameter side. However, there is a possibility that the tapered rollers 15 contained in the pockets 16 located at the opposite ends shown in Fig. 4 fall off to the outer diameter side OS. In this embodiment, as shown in Fig. 3, falling-off preventers 32 are arranged along outer diameter surfaces 23a of the pillars 23 located at opposite ends of the segment 20. The falling-off preventer 32 prevents the tapered roller 15 from falling off to the outer diameter side.

The falling-off preventer 32 is made of, for example, resin or metal. However, a material of the falling-off preventer 32 is not limited to this. As shown in Fig. 6, the falling-off preventer 32 has a pillar-shaped portion 32a extending along an outer diameter surface of the segment 20, a base portion 32b extending along a large-diameter-side lateral-surface of the segment 20 and a segment engaging portion 32c engaged with an inner diameter surface of the segment 20.

In this embodiment, the pillar-shaped portion 32a extends along an outer diameter surface 22a of the large-diameter-side arc-shaped portion 22, the outer diameter surface 23a of the pillar 23 and an outer diameter surface 21a of the small-diameter-side arc-shaped portion 21. However, it is sufficient that the pillar-shaped portion 32a extends at least along the outer diameter surface 22a of the large-diameter-side arc-shaped portion 22. The pillar-shaped portion 32a prevents the tapered roller 15 (Fig. 3) from falling off by abutting the pillar-shaped portion 32a against the outer diameter surface 22a of the large-diameter-side arc-shaped portion 22 and the tapered roller 15 (Fig. 3). In this embodiment, a contact surface 32aa of the pillar-shaped portion 32a with the tapered roller 15 (Fig. 3) has a concave shape curved along an outer shape of the tapered roller 15 (Fig. 3).

The base portion 32b abuts a large-diameter-side lateral-surface 22b of the large-diameter-side arc-shaped portion 22. The segment engaging portion 32c is a claw-shaped member which extends from the base portion 32b to the small diameter side and is engaged with an inner diameter surface 22c of the large-diameter-side arc-shaped portion 22.

As described above, the falling-off preventer 32 is engaged with the outer diameter surface 22a, the large-diameter-side lateral-surface 22b and the inner diameter surface 22c of the large-diameter-side arc-shaped portion 22 of the segment 20. Specifically, the pillar-shaped portion 32a of the falling-off preventer 32 is engaged with the outer diameter surface 22a of the large-diameter-side arc-shaped portion 22, and the segment engaging portion 32c is engaged with the inner diameter surface 22c of the large-diameter-side arc-shaped portion 22. Accordingly, movement of the falling-off preventer 32 in the radial direction is restricted.

The falling-off preventer 32 of this embodiment has a guide portion 35 with which the connector 25 is engaged. The guide portion 35 is provided on the base portion 32b of the falling-off preventer 32. To be specific, the guide portion 35 is provided on an opposite side to a surface in which the base portion 32b of the falling-off preventer 32 abuts the segment 20.

In this embodiment, the guide portion 35 is an engaging groove with which the connector 25 (Fig. 1) is engaged. Specifically, the guide portion 35 is a groove opened outward in a radial direction. However, the shape of the guide portion 35 is not limited to this. For example, as shown in a variation of Fig. 7, the guide portion 35 may be an insertion hole into which the connector 25 is inserted.

In addition, as shown in a variation of Fig. 8, a width W1 of an entrance of the groove-shaped guide portion 35 may be smaller than a width W2 of the connector 25. The width of the engaging groove (the guide portion) 35 other than the entrance is larger than the width W2 of the connector 25 (W1 < W2 < W3). In this case, the guide portion 35 is elastically deformed so that the connector 25 is inserted into the engaging groove (the guide portion) 35. Accordingly, the connector 25 is prevented from slipping out from the engaging groove (the guide portion) 35 when assembling.

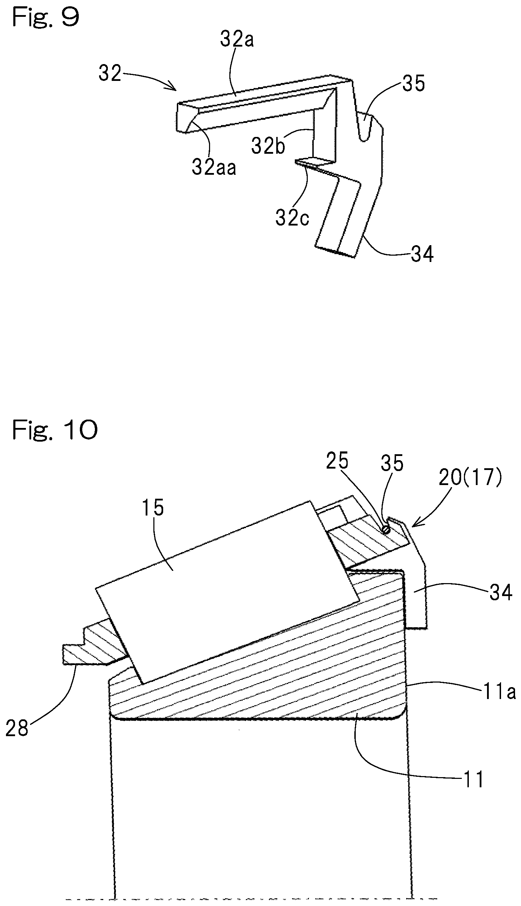

In a variation of Fig. 9, the falling-off preventer 32 includes an inner ring engaging portion 34 extending radially inward from the base portion 32b. As shown in Fig. 10, in a state where the falling-off preventer 32 is attached to the segment 20, the inner ring engaging portion 34 is engaged with a large end surface 11a of the inner ring 11. Accordingly, it is possible to prevent an inner diameter side of the segment 20 from spreading due to tightening of the connector 25.

As shown in Fig. 5, a falling-off preventer guide portion 33 is provided on an end portion in the circumferential direction of the large-diameter-side arc-shaped portion 32 of the segment 20. The falling-off preventer guide portion 33 suppresses the movement of the falling-off preventer 32 in the circumferential direction. In this embodiment, the falling-off preventer guide portion 33 is a protrusion protruding radially outward from the end portion in the circumferential direction of the outer diameter surface 22a of the large-diameter-side arc-shaped portion 32 and a protrusion protruding radially inward from an end portion in the circumferential direction of the inner diameter surface 22c of the large-diameter-side arc-shaped portion 32. However, the shape of the falling-off preventer guide portion 33 is not limited to this.

As shown in Fig. 5 and Fig.6, the falling-off preventer 32 can be inserted into and drawn from the segment 20 from the large end surface 11a (Fig. 1) of the inner ring 11 along the falling-off preventer guide portion 33. In other words, the falling-off preventer 32 can be attached to and detached from the segment 20.

Large-diameter-side protruding portions 26 are provided on opposite end sides of the large-diameter-side lateral-surface 22b of the large-diameter-side arc-shaped portion 22 of the segment 20. The large-diameter-side protruding portion 26 protrudes in the axial direction from the large-diameter-side lateral-surface 22b of the large-diameter-side arc-shaped portion 22. The large-diameter-side protruding portion 26 includes an engaging portion 27 which is engaged with the connector 25. In this embodiment, the engaging portion 27 is an engaging groove to which the connector 25 is fitted.

The large-diameter-side protruding portion 26 is arranged so as not to interfere with the falling-off preventer 32 and the falling-off preventer guide portion 33. In this embodiment, in the inner ring assembly as shown in Fig. 3, the falling-off preventer 32 is attached between the large-diameter-side protruding portion 26 and the falling-off preventer guide portion 33 in the circumferential direction. In other words, the large-diameter-side protruding portion 26 is located in the circumferential direction side by side with the falling-off preventer 32, and the engaging portion 27 (Fig. 5) of the large-diameter-side protruding portion 26 is continued to the guide portion 35 (Fig. 6) of the falling-off preventer 32. Each retainer segment 20 and each falling-off preventer 32 are connected by engaging the connector 25 (Fig. 1) with the engaging portion 27 (Fig. 5) and the guide portion 35 (Fig. 6) so as to be tightened.

The connector 25 of Fig. 1 will be described. The connector 25 is removable with respect to the segment 20 and the falling-off preventer 32 (Fig. 3) and prevents the segment retainers 17 arranged in a ring shape from being broken up. The connector 25 is, for example, a wire. However, the connector 25 is not limited to a wire, but may be a belt or the other similar members.

In this embodiment, opposite end portions of the connector 25 is connected together by a fastening portion or a fastening member. By arranging the connector 25 in the vicinity of the large-diameter-side arc-shaped portion 22 of the retainer 17 shown in Fig. 5, a clearance is secured to make it possible to remove the connector 25 by a hand or a tool after assembling the bearing. In addition, it is preferable that the fastening portion or the fastening member is arranged between the large-diameter-side protruding portions 26 of the opposite ends of the large-diameter-side arc-shaped portion 22 of the segment 20.

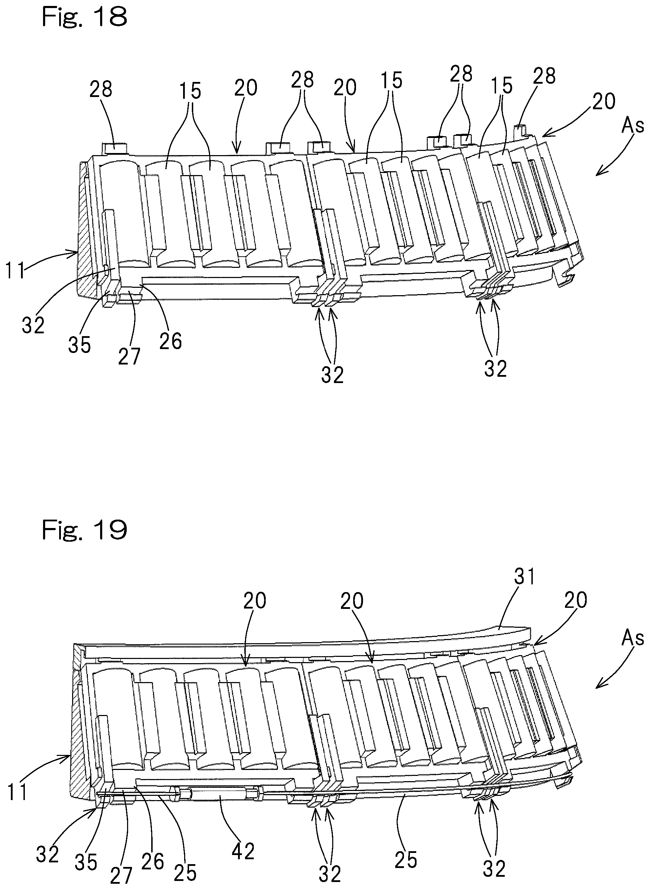

While the connector 25 may be a single body extending continuously, the connector 25 may be divided into a plurality of the connector segments 25, and ends of each connector segment 25 may be connected together by the fastening portion and a fastening member 42 (Fig. 19). In this case, it is preferable that a plurality of the fastening portions and the fastening members 42 is arranged on a circumference at equal intervals. By the fastening portion or the fastening member 42 (Fig. 19), a fastening force can be equally applied to the entire connector 25.

When a wire is used as the connector 25, a hook or a turnbuckle (Fig. 19) can be used as the fastening member 42. Using a turnbuckle is preferable since a turnbuckle is removable, the tightening force will not decrease, and the tightening force is adjustable. When a wire is used as the connector 25, it is preferable to use a removable buckle since the tightening force will not decrease.

As shown in Fig. 19, when a turnbuckle is used as the fastening member 42, the fastening member 42 has a body having a female thread portion. Ends of the connectors 25 can be connected together by screwing a male thread portion provided on the end of the connector 25 into the body of the fastening member 42. Rotating the body of the turnbuckle 42 can impart a tension to the connector 25, and rotating the body of the turnbuckle 42 reversely makes it possible to unbind the opposite ends of the connectors 25.

In this embodiment, as shown in Fig. 5, the small-diameter-side arc-shaped portion 21 of the segment 20 includes a small-diameter-side protruding portion 28. The small-diameter-side protruding portion 28 protrudes in the axial direction from a small-diameter-side lateral-surface of the small-diameter-side arc-shaped portion 21. In this embodiment, the small-diameter-side protruding portions 28 are provided on opposite ends of the small-diameter-side arc-shaped portion 21 in the circumferential direction.

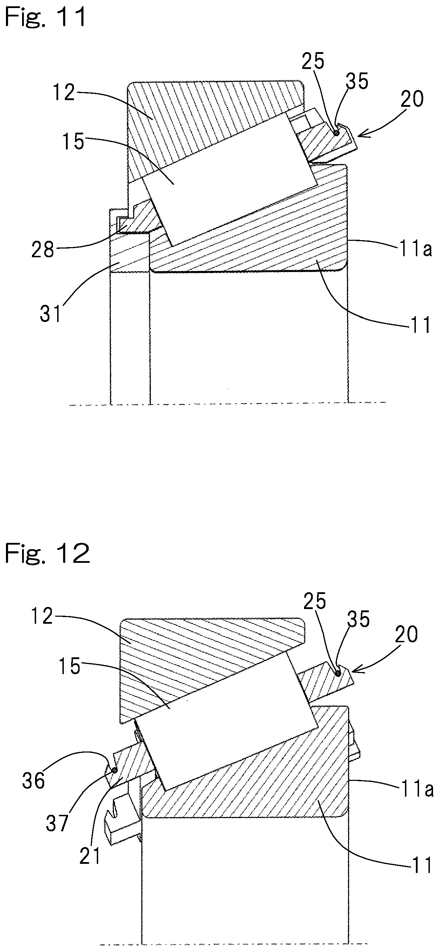

As shown in Fig. 11, a ring-shaped jig 31 can be fitted into the small-diameter-side protruding portion 28. When a large diameter side of each segment 20 is bound by the connectors 25, the ring-shaped jig 31 fitted into the small-diameter-side protruding portion 28 prevents the inner diameter side of the segment 20 from spreading due to tightening of the connector 25. The ring-shaped jig 31 is freely removable.

In a variation of Fig. 12, instead of the small-diameter-side protruding portion 28 (Fig. 11), a small-diameter-side-engaging portion 36 is provided on the small-diameter-side lateral-surface of the small-diameter-side arc-shaped portion 21 of the retainer segment 20. In the variation of Fig. 12, the small-diameter-side engaging portion 36 is an engaging groove with which a small-diameter-side connector 37 is engaged. However, it is only required to engage the small-diameter-side connector 37 with the small-diameter-side engaging portion 36. Therefore, the small-diameter-side engaging portion 36 is not limited to an engaging groove.

The small-diameter-side connector 37 is, for example, a wire and is removable with respect to the segment 20. The retainer segments 20 may be connected by the small-diameter-side connector 37. When the large diameter side of each segment 20 is bound by the connectors 25, tightening of the small-diameter-side connector 37 fitted to the small-diameter-side engaging portion 36 prevents the inner diameter side of the segment 20 from spreading.

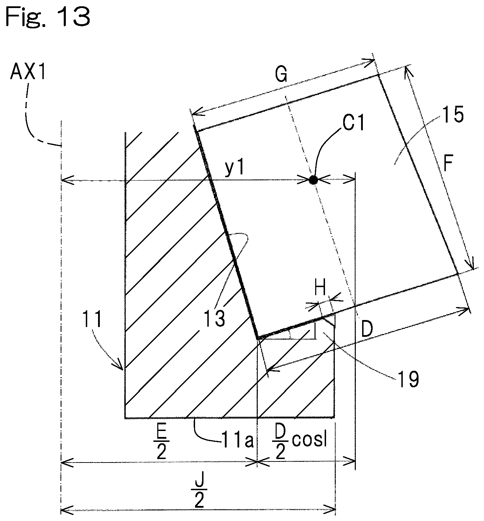

An assembling procedure of the tapered roller bearing of this embodiment will be described. Firstly, as shown in Fig. 3, the inner ring assembly As in which the inner ring 11, the tapered roller 15 and the retainer 17 are integrated is assembled. To assemble the inner ring assembly As, first of all, the tapered rollers 15 contained in the pockets 16 (Fig. 1) other than opposite ends of the pockets 16 are arranged on the raceway surface of the inner ring 11 with the large end surface 11a (Fig. 13) of the inner ring 11 facing downward.

When the tapered rollers 15 are arranged on the raceway surface 13 of the inner ring 11 with the large end surface 11a (Fig. 13) of the inner ring 11 facing downward, there is a possibility that the tapered rollers 15 fall off from the inner ring 11 due to self-weight. To prevent the tapered rollers 15 from falling off from the inner ring 11, as shown in Fig. 13, the distance from a central axis AX1 of the inner ring 11 to the leading edge of the large flange portion 19 is set larger than the distance from the central axis AX1 of the inner ring 11 to a center of gravity C1 of the tapered roller 15.

Specifically, in a state in which the tapered roller 15 is arranged on the raceway surface 13 of the inner ring 11 with the large end surface 11a of the inner ring 11 facing downward, when an angle of the large flange portion 19 of the inner ring 11 with respect to a straight line that is perpendicular to the central axis AX1 of the inner ring 11 is defined as I, a chamfered width of the leading edge of the large flange portion 19 is defined as H, a distance from the central axis AX1 of the inner ring 11 to the center of gravity C1 of the tapered roller 15 is defined as y1, and a diameter of the large flange portion 19 is defined as J, the condition (1) below may be satisfied.

$$(J/2) - H \cdot cosl > y1 \cdots (1)$$

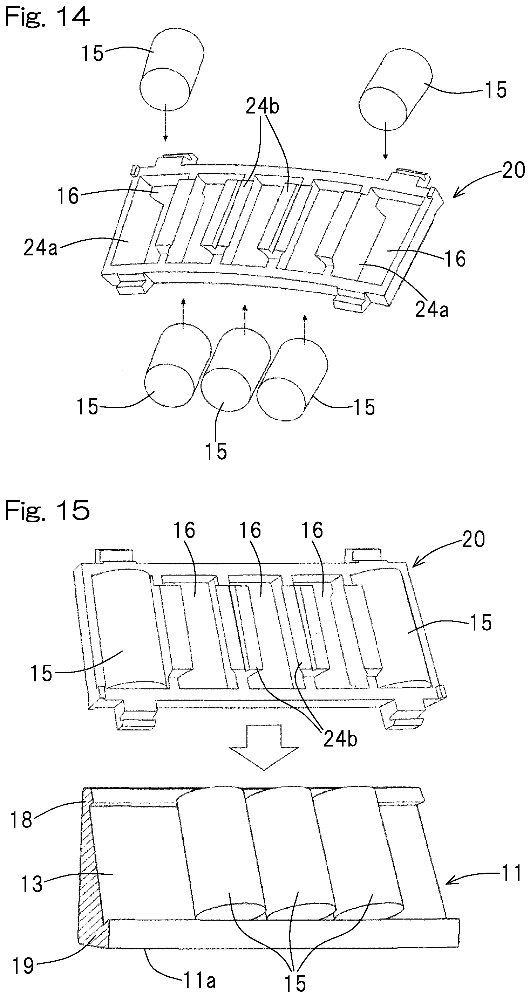

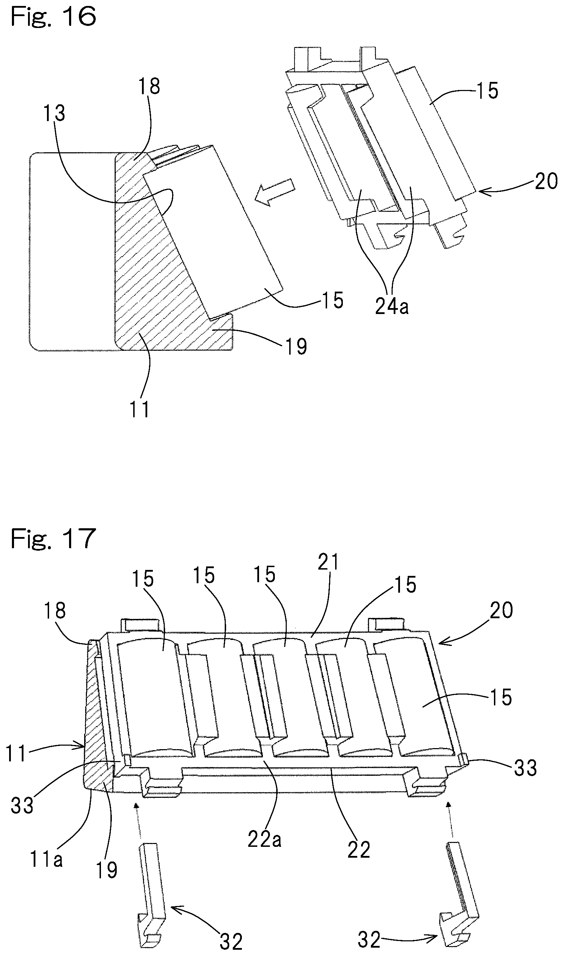

Then, as shown in Fig. 14, the tapered rollers 15 are inserted into opposite ends of the pockets 16 of the segment 20. In this state, as shown in Fig. 15 and Fig. 16, the segment 20 is put over the inner ring 11 in which the tapered rollers 15 are arranged. Consequently, the tapered rollers 15 are inserted from the inner diameter side into the pockets 16 other than opposite ends of the pockets 16.

Subsequently, as shown in Fig. 17, the falling-off preventer 32 is inserted from a large end surface side of the inner ring 11 along the falling-off preventer guide portions 33 arranged at opposite ends of the large-diameter-side arc-shaped portion 22 in order to prevent the tapered roller 15 from falling off toward the large diameter side.

Thereafter, the ring-shaped jig 31 (Fig. 19) that is an L-shape is fitted into the small-diameter-side protruding portion 28 protruding toward a small diameter side of the segments 20 arranged in a ring shape shown in Fig. 18. Fig. 18 shows a state before the ring-shaped jig 31 (Fig. 19) is fitted, and Fig. 19 shows a state after the ring-shaped jig 31 is fitted.

Further, as shown Fig. 19, the connector 25 is engaged with the engaging portion 27 of the large-diameter-side protruding portion 26 of the large-diameter-side lateral-surface 22b (Fig. 5) of the segment 20 and the guide portion 35 of the falling-off preventer 32. Ends of the connectors 25 arranged at an outer diameter side of the segment 20 are bound by the fastening members 42, and, in addition, the connectors 25 are tightened by the fastening members 42. Accordingly, a plurality of the segments 20 arranged in the ring shape is integrated. As described above, the assembly of the inner ring assembly As is completed. The ring-shaped jig 31 can be removed by moving it along the central axis after the inner ring assembly As is assembled.

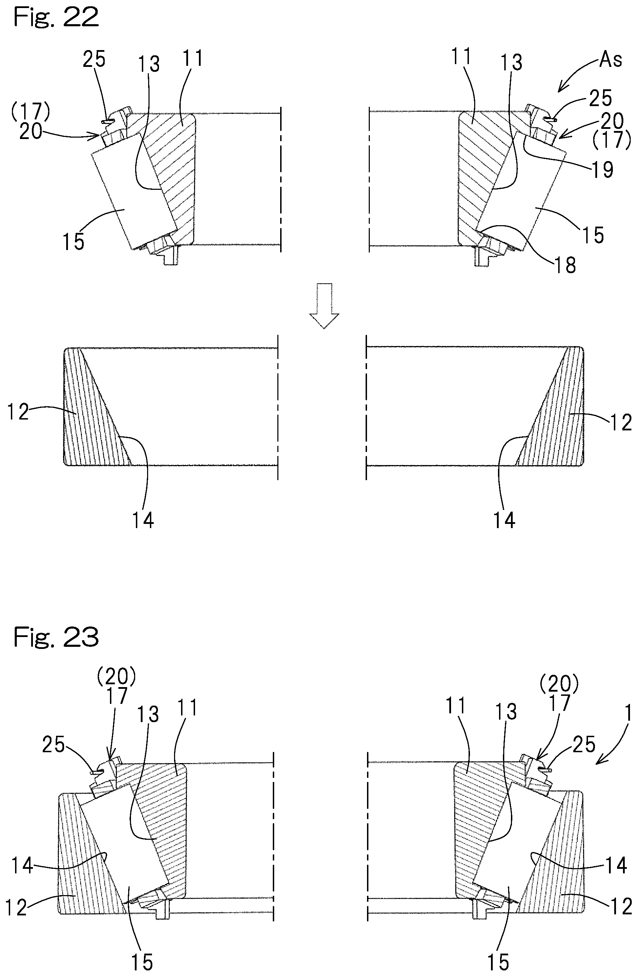

As shown in Fig. 22 and Fig. 23, the inner ring assembly As is incorporated into the outer ring 12 after the inner ring assembly As is assembled. The inner ring assembly As is incorporated into the outer ring 12 in an upside-down state with a small diameter side of the inner ring assembly As facing downward. Even in the upside-down state, the segments 20 will not be broken up since outer circumferential sides of the segments 20 arranged in a ring shape are connected by the connectors 25.

In addition, the tapered rollers 15 inserted into the pockets 16 other than opposite ends of the pockets 16 of each segment 20 are prevented from falling off by the second guide claw 24b (Fig. 3) provided on the outer diameter side, and the tapered rollers 15 inserted into opposite ends of the pockets 16 (Fig. 14) are prevented from falling off by the falling-off preventer 32 (Fig. 17). An incorporation into the inner ring 12 is performed after the ring-shaped jig 31 (Fig. 19) is removed.

Even when the inner ring assembly As is turned into an upside-down state with the ring-shaped jig 31 (Fig. 19) being removed, the tapered rollers 15 are fitted between the large flange portion 19 and the small flange portion 18, so that the tapered rollers 15 are hooked on the small flange portion 18. Consequently, the segments 20 are prevented from falling off.

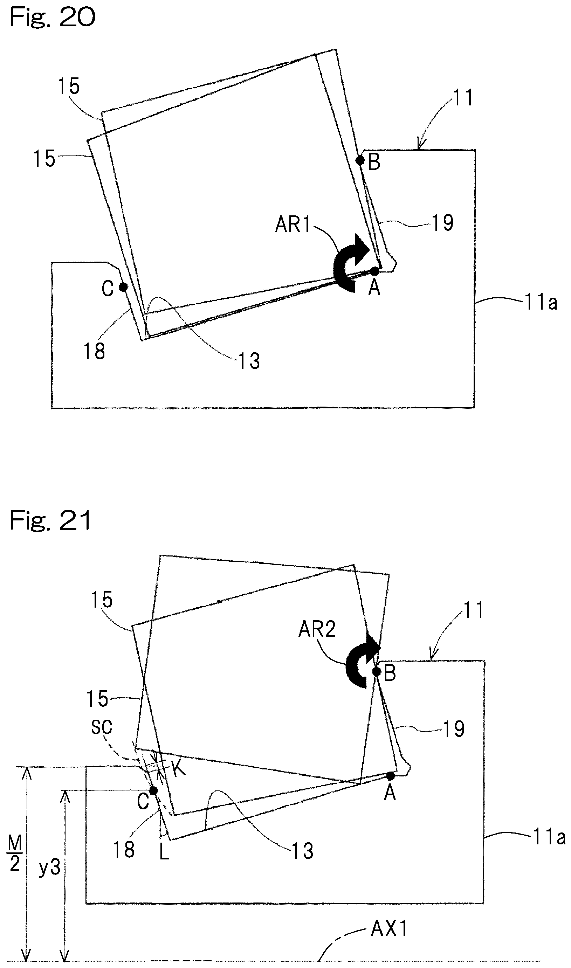

When the tapered roller 15 is not in contact with the large flange portion 19, the tapered roller 15 rotates in an arrow AR1 about a point A on the raceway surface 13 as shown in Fig. 20. When the tapered roller 15 is in contact with the large flange portion 19, the tapered roller 15 rotates in an arrow AR2 about a point B on an inner surface of the large flange portion 19 as shown in Fig. 21.

When the tapered roller 15 shown in Fig. 21 rotates about the point B, an end surface of the tapered roller 15 on the small diameter side comes into contact with a point C on a side surface of the small flange portion 18. Therefore, the rotation of the tapered roller 15 is suppressed. Here, the point C is a contact point at which the side surface of the small flange portion 18 comes into contact with an end surface of the tapered roller 15 on the small diameter side when the tapered roller 15 is rotated around a leading edge of the large flange portion 18 of the inner ring 11. In other words, the point C is an intersection of a spline curve SC drawn by a locus of a small end surface corner of the tapered roller 15 when the tapered roller 15 rotates, with the side surface of the small flange portion 18.

Specifically, in a state in which the retainer segments 20 are connected by the connectors 25 shown in Fig. 22, when a diameter of the small flange portion 18 of the inner ring11 shown in Fig. 21 is defined as M, an angle of the small flange portion 18 with respect to a straight line that is perpendicular to the central axis AX1 of the inner ring 11 is defined as L, a chamfered width of a leading edge of the small flange portion 18 is defined as K, and a distance, to the central axis AX1, from the contact point C is defined as y3, the condition (2) below is satisfied.

$$(M/2) - K \cdot cosL > y3 \cdots (2)$$

After assembling the tapered roller bearing 1 shown in Fig. 23, it is possible to remove the connector 25 and the falling-off preventer 32 by loosening the fastening member 42 (Fig. 19). After assembling the tapered roller bearing 1, each segment 20 will not be broken up even if the connectors 25 and the falling-off preventers 32 (Fig. 19) are removed.

According to this embodiment, as described above, since the connector 25 and the falling-off preventer 32 shown in Fig. 19 are removable, the inner ring assembly As is integrated by the connector 25 and the falling-off preventer 32, and the connector 25 and the falling-off preventer 32 can be removed after incorporating a bearing. Moreover, since the retainer 17 shown in Fig. 4 is guided by only the tapered roller 15 with the first guide claw 24a and the second guide claw 24b during operation, the roller guide can be realized.

[Second Embodiment]

A second embodiment of the present invention will be described. In the following description, the same features as in the first embodiment are designated by the same reference numerals, and the detailed description thereof may be omitted.

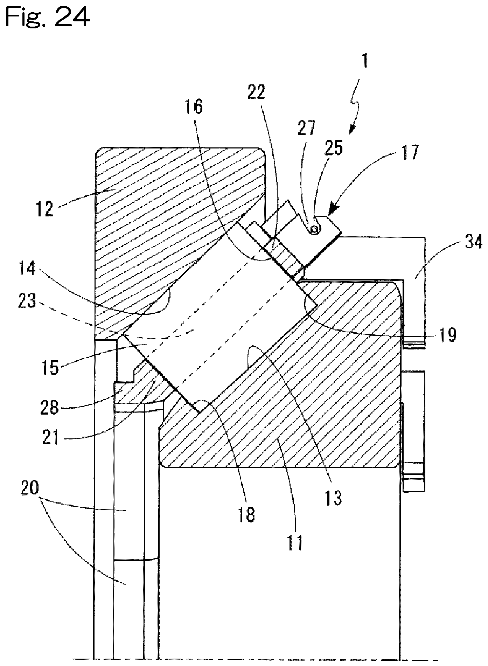

As shown in Fig. 24, the tapered roller bearing 1 according to the second embodiment includes the inner ring 11, the outer ring 12 concentrically arranged over the outer circumference of the inner ring 11, the plurality of tapered rollers 15 arranged between the inner ring 11 and the outer ring 12, and the retainer 17 including the pocket 16 that holds the tapered roller 15 at fixed intervals.

The outer ring 12 has the raceway surface 14 on which each tapered roller 15 rolls on the inner circumference of the outer ring 12.

The inner ring 11 has the raceway surface 13 on which each tapered roller 15 rolls on the outer circumference of the inner ring 11, and the large flange portion 19 and the small flange portion 18 which come into contact with end surfaces of the tapered roller 15 on the opposite sides in the axial direction across the raceway surface 13.

In a large tapered roller bearing 1 used to support a main shaft or the like of a wind power generator, an average diameter of the tapered roller 15 is 40 mm or lager and an outer diameter of the bearing 1 m or larger.

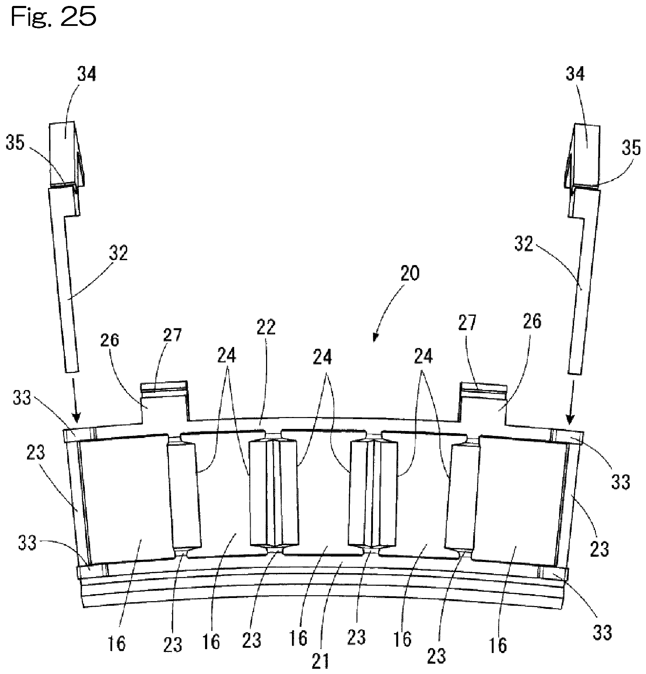

The retainer 17 is a segment retainer consisting of the plurality of segments 20, as shown in Fig. 25.

As shown in Fig. 25, Fig. 26 and Fig. 27, the segment 20 has a pair of the small-diameter-side arc-shaped portion 21 and the large-diameter-side arc-shaped portion 22 opposing at a predetermined interval, and the plurality of pillars 23 extended between the small-diameter-side arc-shaped portion 21 and the large-diameter-side arc-shaped portion 22. A space surrounded by two adjacent pillars 23, the small-diameter-side arc-shaped portion 21, and the large-diameter-side arc-shaped portion 22 is defined as the pocket 16 for containing the tapered roller 15.

Three or more pockets 16 for containing the tapered rollers 15 are arranged in the circumferential direction on one segment 20. In this embodiment, six pillars 23 are provided on one segment 20, and five pockets 16 for containing the tapered rollers 15 are arranged between the adjacent pillars 23.

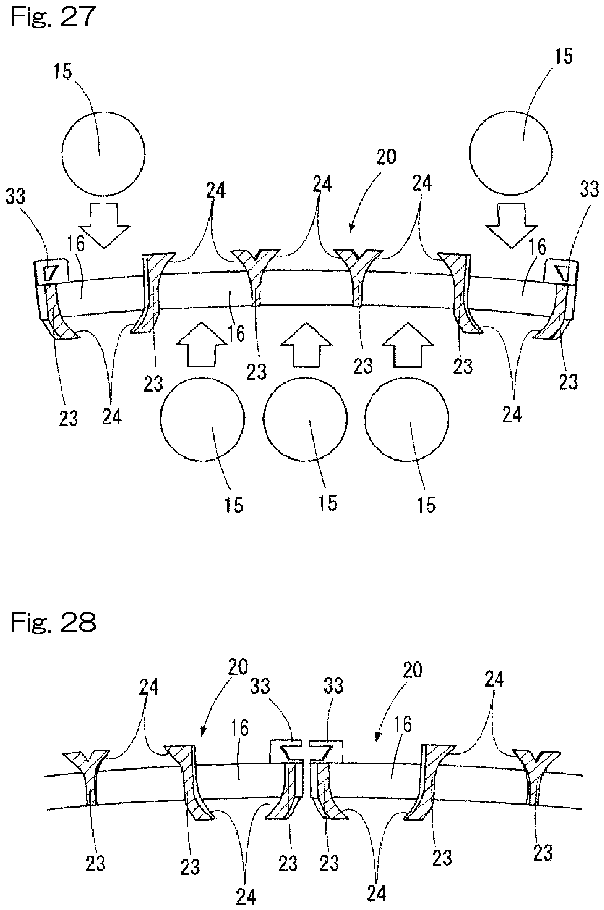

On an outer diameter side of the opposite pillars 23 of the pockets 16 of the five pockets 16 other than the pockets 16 located at ends in the circumferential direction i.e., three central pockets 16 in this embodiment, the guide claws 24 are provided for preventing the tapered rollers 15 from slipping out to the outer diameter side, so that the tapered rollers 15 can be inserted into the pockets 16 from the inner diameter side of the segment 20 as shown in Fig. 27.

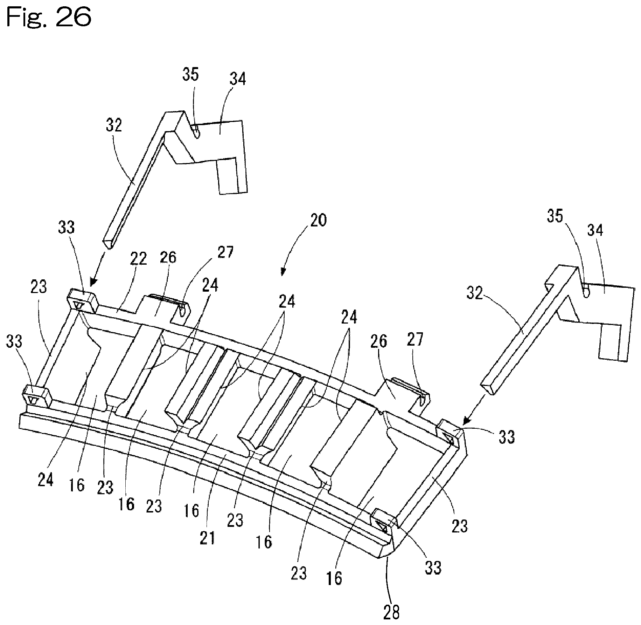

The guide claws 24 are provided on an inner diameter side of the opposite pillars 23 of the pockets 16 located at ends in the circumferential direction, so that the tapered rollers 15 can be inserted into the pockets 16 from the outer diameter side. In addition, as shown in Fig. 26 and Fig. 27, the falling-off preventer 32 provided along the outer diameter surface of the pillar 23 located at opposite ends of the segment 20 prevents the tapered rollers 15 contained in opposite ends of the pockets 16 from falling off to the outer diameter side. The falling-off preventer 32 can be attached to and removed from the falling-off preventer fixing portion 33 formed at outer diameter surfaces of the opposed end sides, in the circumferential direction, of the small-diameter-side arc-shaped portion 21 and the large-diameter-side arc-shaped portion 22 from the large end surface side.

Since the guide claw 24 is provided on the inner diameter side of the pillar 23 of the pockets 16 located at ends in the circumferential direction of the pockets 16 retaining the tapered rollers 15, the retainer 17 is of a rolling element guiding system by the tapered rollers 15 retained in the pockets 16 located at the ends.

As shown in Fig. 24 and Fig. 26, in a state in which the falling-off preventer 32 is inserted into the falling-off preventer fixing portion 33 provided on outer diameter surfaces of opposite ends of the small-diameter-side arc-shaped portion 21 and the large-diameter-side arc-shaped portion 22 from the large end surface side of the inner ring 11, the inner ring engaging portion 34 engaged with a large end surface of the inner ring 11 is provided on an end, of the large end surface side of the inner ring 11, of the falling-off preventer 32.

A face being in contact with the tapered roller 15 of the falling-off preventer 32 is a round face.

Besides the falling-off preventer fixing portion 33 having a hole for inserting the falling-off preventer 32 as shown in Fig. 26 and Fig. 27, the falling-off preventer fixing portion 33 provided on the outer diameter surfaces of opposite ends of the small-diameter-side arc-shaped portion 21 and the large-diameter-side arc-shaped portion 22 may be a groove shape in which each falling-off preventer fixing portion 33 is opened to the adjacent segment 20 as shown Fig. 28. When the falling-off preventer fixing portion 33 is formed in the groove shape in which each falling-off preventer fixing portion 33 is opened as shown in Fig. 28, the falling-off preventer 32 (Fig. 26) as a common single body is inserted to the opposite falling-off preventer fixing portion 33 of the adjacent segments 20 formed in the groove shape, so that the tapered rollers 15 (Fig. 24) contained in opposite ends of the pockets 16 of the adjacent segments 20 can be prevented from falling off to the outer diameter side. Therefore, it is possible to reduce the number of components.

As shown in Fig. 26, the segments 20 are arranged in a ring shape with end surfaces of the small-diameter-side arc-shaped portion 21 and the large-diameter-side arc-shaped portion 22 being butted together.

On opposite end sides of the large-diameter-side lateral-surface of the large-diameter-side arc-shaped portion 22 of the segment 20, the protruding portions 26 are provided so as to protrude in the axial direction, and each protruding portion 26 have the engaging portion 27 for the connector 25 (Fig. 24) to be arranged on the large-diameter side of the segments 20 arranged in a ring shape. Preferably, the protruding portions 26 located on opposite end sides of the large-diameter-side lateral-surface of the large-diameter-side arc-shaped portion 22 of the segment 20 are provided such that contact is avoided between the protruding portions 26 of the adjacent segments 20.

On the large-diameter-side lateral-surface of a structure 34, engaged with a large end surface of the inner ring, of the falling-off preventer 32, the groove-shaped guide portion 35 engaged with the connector 25 (Fig. 24) wound around on the large diameter side of each segment 20 arranged in a ring shape is provided.

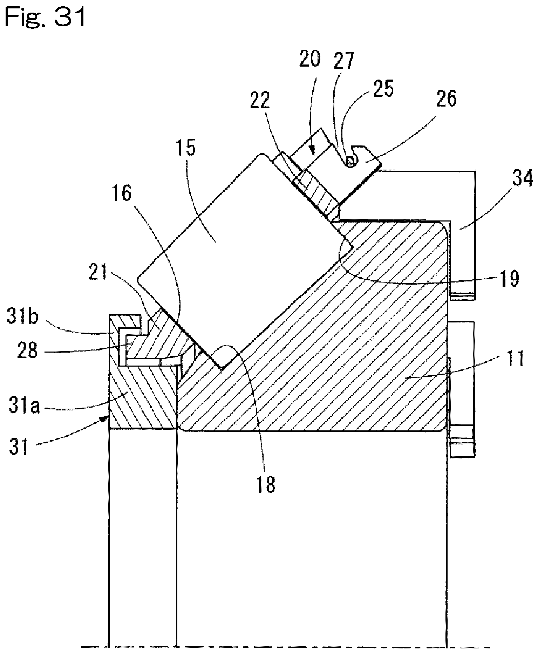

A wing portion 28 protruding to the small-diameter side on the small-diameter-side lateral-surface of the small-diameter-side arc-shaped portion 21 of the segment 20 is provided, and , as shown in Fig. 31, the ring-shaped jig 31 is fitted into the small-diameter-side protruding portion of each segment 20 arranged in a ring shape when the large diameter side of each segment 20 arranged in a ring shape is bound by the connector 25 (Fig. 24). Accordingly, the inner diameter side of the segment 20 is prevented from spreading due to tightening of the connector 25.

The ring-shaped jig 31 is formed from a ring portion 31a that abuts against the end surface on the small-diameter side of the inner ring 11 and an engaging portion 31b provided so as to protrude toward the outer diameter side from an end of the ring portion 31a in the axial direction, so that the engaging portion 31b is fitted into the small-diameter-side protruding portion 28 of the segment 20 with the ring portion 31a abutting against the end surface on the small-diameter side of the inner ring 11.

The ends of the connector 25 wound around on the large diameter side of each segment 20 are bound by the fastening member 42 (Fig. 19) such as a turnbuckle. When a turnbuckle is used as the fastening member 42 (Fig. 19), the fastening member 42 has a body having a female thread portion. Ends of the connectors 25 can be connected together by screwing a male thread portion provided on the end of the connector 25 into the body of the turnbuckle 42. Rotating the body of the turnbuckle can impart a tension to the connector 25, and rotating the body in the opposite direction to the tightening direction makes it possible to unbind the opposite ends of the connectors 25.

A wire or a belt can be used as the connector 25. When a wire is used as the connector 25, a removable hook or a turnbuckle can be used as the fastening member 42 (Fig. 19). Using a turnbuckle is most preferable since a turnbuckle is removable, the tightening force will not decrease, and the tightening force is adjustable. When a belt is used as the connector 25, it is preferable to use a removable buckle as the fastening member 42 (Fig. 19) since the tightening force will not decrease.

The segment 20 is made of resin or steel. Poly Ether Ketone that contains carbon fibers or glass fibers can be used as resin that forms the segment 20.

An assembling procedure of the tapered roller bearing 1 in which the segment 20 of the second embodiment is used is omitted since it is the same as that described in the first embodiment with Figs. 13 to 23.

The tapered roller bearing 1 of the second embodiment performs the same effect as the first embodiment.

[Third Embodiment]

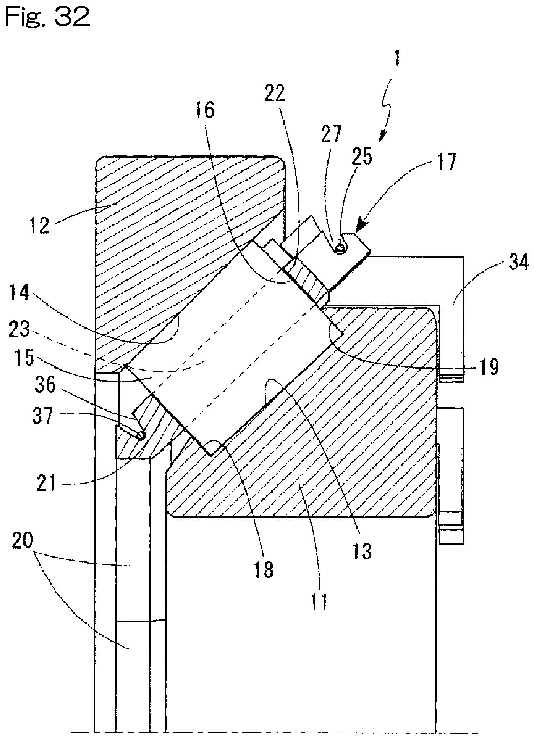

In the second embodiment, the small-diameter-side protruding portion 28 protruding to the small diameter side on the small-diameter-side lateral-surface of the small-diameter-side arc-shaped portion 21 is provided, and, the ring-shaped jig 31 that is an L-shape is fitted into the small-diameter-side protruding portion 28 of each segment 20 arranged in a ring shape when the large diameter side of each segment 20 arranged in a ring shape is bound by the connector 25. In a third embodiment shown Fig. 32, instead of the ring-shaped jig 31, the small-diameter-side engaging portion 36 is provided on the small-diameter-side lateral-surface of the small-diameter-side arc-shaped portion 21, and the small-diameter-side engaging portion 36 is engaged with the small-diameter-side connector 37 wound around on the small diameter side of each segment 20 arranged in a ring shape. By removably binding ends of the small-diameter-side connector 37 with the fastening portion and a fastening member (not illustrated), the inner diameter side of the segment 20 is prevented from spreading due to tightening of the connector 25.

[Fourth Embodiment]

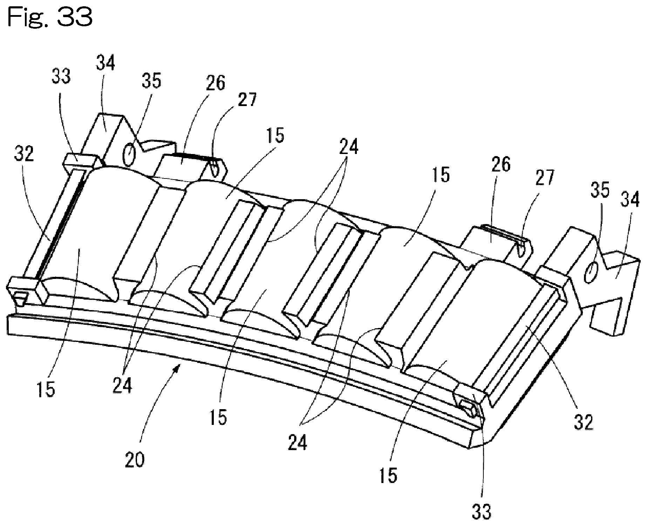

In the second and third embodiments, the groove-shaped guide portion 35 engaged with the connector 25 is provided on the inner ring engaging portion 34, engaged with the large end surface 11a of the inner ring 11, of the falling-off preventer 32. On the other hand, in a fourth embodiment shown in Fig. 33, the shape of the guide portion 35 can be a hole shape through which the connector 25 passes.

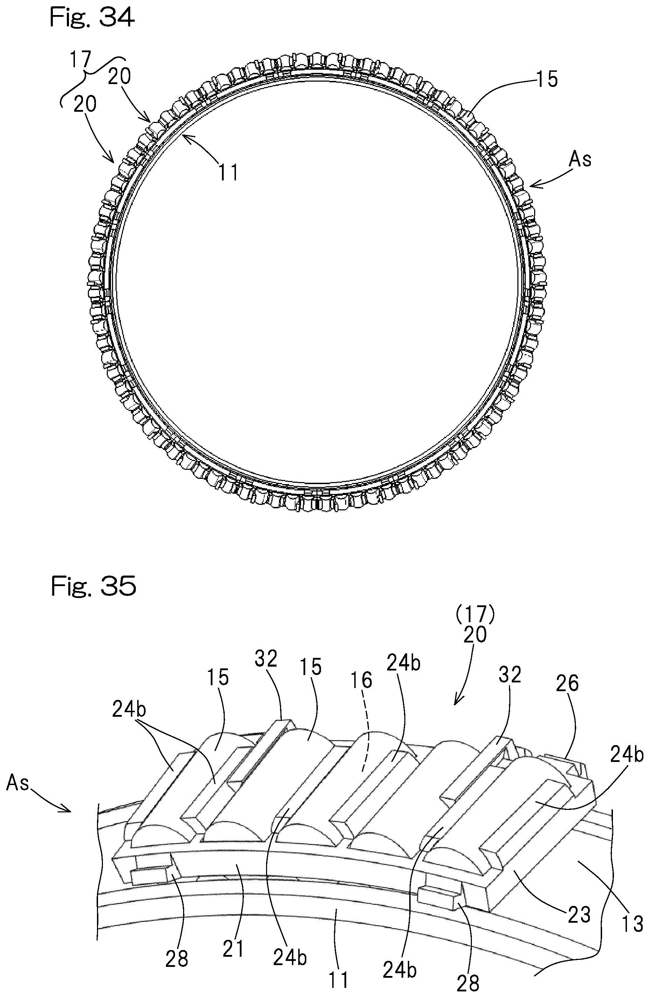

[Fifth Embodiment: Fig. 34 to Fig. 38]

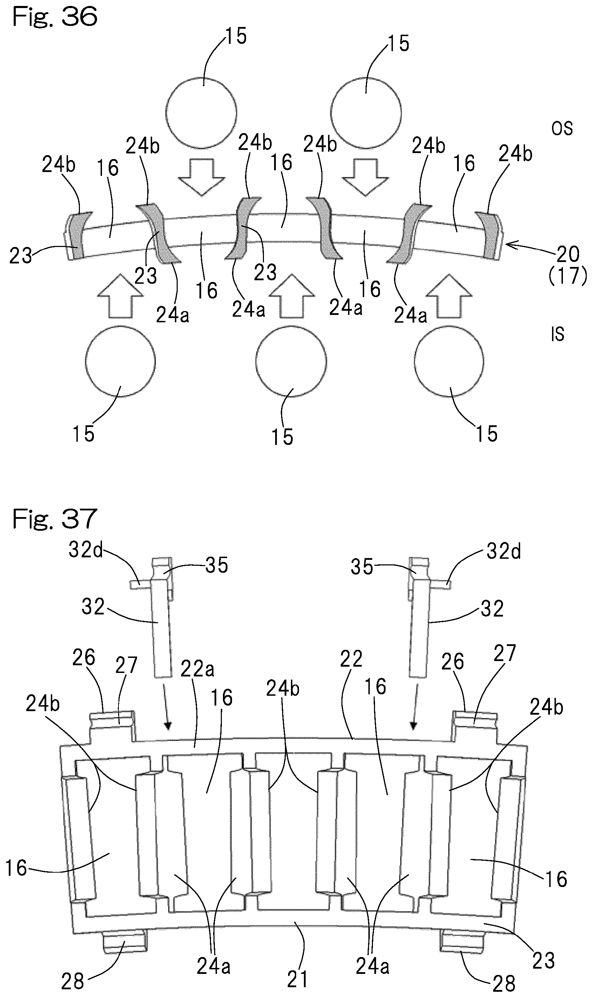

As shown in Fig. 34 to Fig. 36, in each pocket 16, each segment 20 may have a guide claw extending toward a direction opposite to a guide claw of the adjacent pocket 16. Specifically, as shown in Fig. 36, the pockets 16, 16 located at the opposite ends in the circumferential direction and the pocket 16 located in the center in the circumferential direction have the second guide claws 24b extending toward the outer diameter side OS from the pillars 23. The two pockets 16, 16 other than the pockets located at the opposite ends and in the center in the circumferential direction have the first guide claws 24a extending toward the inner diameter side IS from the pillars 23.

In the pockets 16, 16 having the first guide claws 24a extending toward the inner diameter side IS from the pillars 23, the tapered rollers 15 are inserted from the outer diameter side OS of the segment 20. In each pocket 16 having the second guide claws 24b extending toward the outer diameter side OS from the pillars 23, the tapered rollers 15 are inserted from the inner diameter side IS of the segment 20. In each pocket 16 having the second guide claw 24b, the second guide claw 24b prevents the tapered rollers 15 from slipping out to the outer diameter side OS.

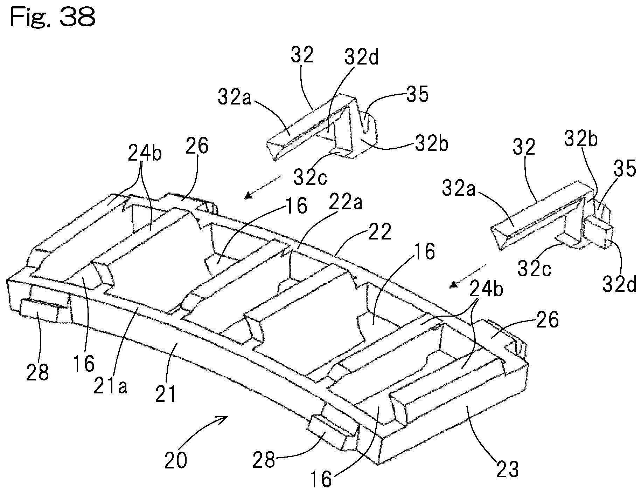

As shown in Fig. 35 and Fig. 37, the falling-off preventer 32 prevents the tapered rollers 15 contained in the two pockets 16, 16 having the first guide claws 24a from falling off to the outer diameter side. As shown in Fig. 37 and Fig. 38, the falling-off preventer 32 can be inserted into and drawn from the large end surface side of the inner ring along an outer diameter surface of the second guide claws in the central sides of the pockets 16, 16 located at the opposite sides.

In addition to the structure of the first embodiment, the falling-off preventer 32 has a second segment engaging portion 32d engaged with an end surface of the large-diameter-side protruding portion 26 of the segment 20. As shown in Fig. 35 and Fig. 38, the movement of the falling-off preventer 32 in the circumferential direction is suppressed by the tapered roller 15, the second guide claws in the central sides of the pockets 16, 16 located at the opposite sides, and the large-diameter-side protruding portion 26 engaged with the second segment engaging portion 32d. Accordingly, the falling-off preventer guide portion can be omitted, and thus it is possible to reduce the weight of the retainer segment 20 and improve lubricity of the tapered roller bearing compared to the other embodiments.

While preferred embodiments have been described thus far with reference to the drawings, various additions, modifications, or omissions can be made therein without departing from the principle of the present invention and are, thus, encompassed within the scope of the present invention.

(Reference Symbols)

| | |
|---|---|
| 1 | tapered roller bearing |
| 11 | inner ring |
| 12 | outer ring |
| 15 | tapered roller |
| 16 | pocket |
| 17 | retainer |
| 20 | retainer segment (segment) |
| 21 | small-diameter-side arc-shaped portion |
| 22 | large-diameter-side arc-shaped portion |
| 23 | pillar |
| 24a | first guide claw |
| 24b | second guide claw |
| 25 | connector |
| 26 | large-diameter-side protruding portion |
| 27 | engaging portion |
| 28 | small-diameter-side protruding portion |
| 31 | ring-shaped jig |
| 32 | falling-off preventer |
| 33 | falling-off preventer guide portion |
| 34 | inner ring engaging portion |
| 35 | guide portion (insertion hole, engagement groove) |
| 36 | small-diameter-side-engaging portion |

37 small-diameter-side connector

**Claims**

1. A tapered roller bearing comprising:

   an inner ring;
   an outer ring;
   a plurality of tapered rollers interposed between the inner ring and the outer ring; and
   a retainer which retains the tapered roller, the retainer including a plurality of retainer segments divided in a circumferential direction, the plurality of the retainer segments being connected by a removable connector, wherein
   each of the retainer segments has three or more pockets arranged in the circumferential direction which hold the tapered rollers,
   each of the retainer segments has a large-diameter-side arc-shaped part and a small-diameter-side arc-shaped portion extending circumferentially and a plurality of pillars which connect the small-diameter-side arc-shaped portion and the large-diameter-side arc-shaped portion, the pockets consisting of: the small-diameter-side arc-shaped portion; the large-diameter-side arc-shaped portion; and the pillar,
   a part of the pockets has a first guide claw extending toward an inner diameter side from the pillar, and the rest of the pockets has a second guide claw extending toward an outer diameter side from the pillar,
   further comprising a removable falling-off preventer which prevents the tapered roller contained in the pocket having the first guide claw from falling off toward the outer diameter side, wherein
   the falling-off preventer is engaged with an outer diameter surface and a large-diameter-side lateral-surface of the large-diameter-side arc-shaped portion of the retainer segment, and
   the retainer segments and the falling-off preventer are connected with the connector.

2. The tapered roller bearing as claimed in claim 1, wherein the falling-off preventer is arranged along the pillar or the second guide claw and is inserted from a large end surface side of the inner ring.

3. The tapered roller bearing as claimed in claim 1 or 2, wherein each of the retainer segments includes, on an end portion in the circumferential direction of the large-diameter-side arc-shaped portion, a falling-off preventer guide portion which suppresses the movement of the falling-off preventer in the circumferential direction.

4. The tapered roller bearing as claimed in claim 1 or 2, wherein the falling-off preventer has a guide portion with which the connector is engaged.

5. The tapered roller bearing as claimed in claim 4, wherein the guide portion is an insertion hole into which the connector is inserted or an engagement groove with which the connector is engaged.

6. The tapered roller bearing as claimed in claim 1 or 2, wherein the falling-off preventer has an inner ring engaging portion engaged with a large end surface of the inner ring.

7. The tapered roller bearing as claimed in claim 1 or 2, further comprising a large-diameter-side protruding portion which has an engaging portion with the connector and is disposed on opposite end sides of the large-diameter-side lateral-surface of the large-diameter-side arc-shaped portion of the retainer segment.

8. The tapered roller bearing as claimed in claim 1 or 2, wherein opposite ends of the connector are connected together by a fastening portion or a fastening member.

9. The tapered roller bearing as claimed in claim 1 or 2, wherein the connector is divided into a plurality of connector segments, and ends of each of the connector segments are connected together by a fastening portion or a fastening member.

10. The tapered roller bearing as claimed in claim 9, a plurality of the fastening portions or the fastening members is arranged at equal intervals in the circumferential direction.

11. The tapered roller bearing as claimed in claim 1 or 2, further comprising a small-diameter-side protruding portion, into which a ring-shaped jig can be fitted, which portion is arranged on a small-diameter-side lateral-surface of the small-diameter-side arc-shaped portion of the retainer segment.

12. The tapered roller bearing as claimed in claim 11, wherein the ring-shaped jig is freely removable.

13. The tapered roller bearing as claimed in claim 1 or 2, wherein the retainer segment is made of Poly Ether Ketone that contains carbon fibers or glass fibers.

14. The tapered roller bearing as claimed in claim 1 or 2, wherein the falling-off preventer is made of resin or metal.

15. The tapered roller bearing as claimed in claim 1 or 2, wherein, in a state in which the tapered roller is arranged on a raceway surface of the inner ring with the large end surface of the inner ring facing downward, when an angle of a large flange portion of the inner ring with respect to a straight line that is perpendicular to a central axis of the inner ring is defined as I, a chamfered width of a leading edge of the large flange portion is defined as H, a distance from the central axis of the inner ring to a center of gravity of the tapered roller is defined as y1, and a diameter of the large flange portion is defined as J, the condition below is satisfied.

$$(J/2) - H \cdot cosI > y1$$

16. The tapered roller bearing as claimed in claim 1 or 2, wherein, in a state in which the retainer segments are connected by the connector, when a diameter of the small flange portion of the inner ring is defined as M, an angle of the small flange portion with respect to a straight line that is perpendicular to a central axis of the inner ring is defined as L, a chamfered width of a leading edge of the small flange portion is defined as K, and a distance, to the central axis, from a contact point C at which a side surface of the small flange portion comes into contact with an end surface of the tapered roller on the small diameter side when the tapered roller is rotated around a leading edge of the large flange portion of the inner ring is defined as y3, the condition below is satisfied.

$$(M/2) - K \cdot cosL > y3$$

17. The tapered roller bearing as claimed in claim 1 or 2, further comprising a small-diameter-side-engaging portion which removably engages a small-diameter-side-connector and is provided on the small-diameter-side lateral-surface of the small-diameter-side arc-shaped portion of the retainer segment.

18. The tapered roller bearing as claimed in claim 1 or 2, wherein the retainer is a retainer for a large tapered roller bearing whose outer diameter exceeds 1 m.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30

Fig. 31

Fig. 32

Fig. 33

Fig. 34

Fig. 35

Fig. 36

Fig. 37

Fig. 38

## INTERNATIONAL SEARCH REPORT

International application No.

**PCT/JP2023/040860**

| A. | CLASSIFICATION OF SUBJECT MATTER |
|---|---|

*F16C 33/50*(2006.01)i; *F16C 33/56*(2006.01)i; *F16C 43/04*(2006.01)i
FI:    F16C33/50; F16C33/56; F16C43/04

According to International Patent Classification (IPC) or to both national classification and IPC

| B. | FIELDS SEARCHED |
|---|---|

Minimum documentation searched (classification system followed by classification symbols)

F16C33/50; F16C33/56; F16C43/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2018/092612 A1 (NTN CORP) 24 May 2018 (2018-05-24)<br>entire text, all drawings | 1-18 |
| A | JP 2008-215390 A (NTN CORP) 18 September 2008 (2008-09-18)<br>entire text, all drawings | 1-18 |
| A | JP 2020-159376 A (NTN CORP) 01 October 2020 (2020-10-01)<br>entire text, all drawings | 1-18 |

☐ Further documents are listed in the continuation of Box C.          ☑ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **22 January 2024** | **30 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/040860**

| Patent document cited in search report | | | Publication date (day/month/year) | Patent family member(s) | Publication date (day/month/year) |
|---|---|---|---|---|---|
| WO | 2018/092612 | A1 | 24 May 2018 | (Family: none) | |
| JP | 2008-215390 | A | 18 September 2008 | (Family: none) | |
| JP | 2020-159376 | A | 01 October 2020 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022185128 A
- JP 2023180301 A
- JP 4342512 B
- JP 2011137530 A
- WO 2013092217 A
- JP 2018080747 A